# EUROPEAN PATENT APPLICATION

(11) **EP 4 776 160 A2**
(43) Date of publication of application: **15.07.2026**
(21) Application number: 26177893.0
(22) Date of filing: 11.05.2026
(51) Int. Cl.: G06F 16/9032, G06F 16/9038

(54) **CONTEXTUAL SYSTEM-WIDE SEARCH**

(30) Priority: 19.05.2025 US 202563808615 P; 06.11.2025 US 202519382198
(71) Applicant: Apple Inc., Cupertino, CA 95014 (US)
(72) Inventor: BERGET, Erik M., Cupertino, 95014 (US); MOHA, Alexandre R., Cupertino, 95014 (US); ALAVI, Amir, Cupertino, 95014 (US); Brendan B., ARONOFF, Cupertino, 95014 (US); SHAH, Chirag M., Cupertino, 95014 (US); TITI, Justin S., Cupertino, 95014 (US); WHITE, Kenneth S., Cupertino, 95014 (US); MONTOYA, Rose G., Cupertino, 95014 (US); KONONENKO, Kateryna, Cupertino, 95014 (US); HSU, Daniel S., Cupertino, 95014 (US); PINEDA, Andres H., Cupertino, 95014 (US); KALUZNY, Michal A., Cupertino, 95014 (US); ROJAS, Michael A., Cupertino, 95014 (US)
(74) Representative: Zacco Denmark A/S

(57) **Abstract**

Systems and methods provide for generating personalized recommendations of digital content or application actions based on user context inferred from on device data. The system identifies a set of potentially relevant applications prior to receiving any user input using machine learning model that leverages current user context to assign likelihood scores to candidate applications. The most relevant applications are then surfaced to the user interface for immediate engagement. The system further collects one or more data streams from various applications, each stream representing user interactions. These streams are processed to extract contextual information in accordance with one or more predefined schemas that specify structured attributes. The resulting records are stored in a relational database which can be efficiently queried by authorized applications and services for personalized recommendations.

## Description

### TECHNICAL FIELD

This disclosure generally relates to a system-wide search for accessing applications or application content, including a contextual system-wide search.

### BACKGROUND

An electronic device such as a mobile phone, laptop or a wearable device may include a system-wide search application, and/or a system-wide search process that is part of the device's operating system. The system-wide search application may provide for searching applications, files, images, and other information on the electronic device.

### BRIEF DESCRIPTION OF THE DRAWINGS

Certain features of the subject technology are set forth in the appended claims. However, for the purpose of explanation, several aspects of the subject technology are set forth in the following figures.
FIG. 1 illustrates an example network environment according to aspects of the subject technology.
FIG. 2 illustrates an example computing architecture for a system according to aspects of the subject technology.
FIG. 3A illustrates an example user interface for the system-wide search application to access digital content.
FIG. 3B illustrates an example user interface for the system-wide search application to access digital content to search a web-based resource.
FIG. 4 illustrates an example user interface for the system-wide search application to display applications recommendations.
FIG. 5 illustrates an example user interface for the system-wide search application to determine the additional parameters required to execute or complete the task specified by the user.
FIG. 6 illustrates an example database to manage the contextual information associated with the user.
FIG. 7 illustrates a flowchart of an example process of determining a display priority of user interface elements according to aspects of the subject technology.
FIG. 8 illustrates a flowchart of an example process of determining a display priority of user interface elements according to aspects of the subject technology.
FIG. 9 illustrates a flowchart of an example process of generating an alert for the user to interact with a user inface element.
FIG. 10 illustrates an example electronic system with which aspects of the subject technology may be implemented in accordance with one or more implementations.

The details above in the Brief Description of the Drawings are intended to describe only some aspects relating to certain embodiments of the innovations herein and should not be deemed in any way limiting with respect to requiring or omitting any aspect for embodiments to be claimed or otherwise limiting the disclosure or embodiments keeping with its scope or spirit.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In some implementations, structures and components are shown in block diagram form to avoid obscuring the concepts of the subject technology.

The subject system provides a system-wide search application to access digital content stored on an electronic device and/or stored remotely, such as over the Internet. The system-wide search application may be natively integrated with the operating system and/or may operate as a dedicated process managed by the operating system. The system-wide search application may provide searching for applications, items/content, and files on the electronic device. Moreover, the system-wide search application extends the search-functionality to include operations/tasks performed by applications on the electronic device. For example, the system-wide search application may allow a user to search for tasks, actions, and/or menu items provided and/or performed by one or more applications on the electronic device. Thus, the system-wide search allows a user to search for and locate a wide variety of items locally-stored on the electronic device, including documents, pictures, music, and applications, as well as searching for tasks, actions, and/or menu items of individual applications on the electronic device, and further allowing a user to search for web-based content, for example, as accessed by a web browser or other application(s) installed on the electronic device.

In addition, the subject system leverages on device contextual signals to infer user intent or informational needs and generates digital content recommendations accordingly. This reduces the need for a user to provide explicit input thereby minimizing interaction overhead and improving the efficiency of user device interactions thereby allowing seamless and intuitive engagement with digital systems, particularly in mobile or resource constrained environments.

The subject system further enables a unified query interface for accessing heterogeneous on device data sources, including but not limited to event based data streams, structured data source and custom defined sources. This unified interface abstracts the underlying complexity of disparate data sources and allows applications and systems to retrieve contextually relevant information without requiring direct integration with the data sources. As a result, developers can more easily build features that leverage user context - such as usage history, environmental attributes, or relationship graphs.

Additionally, the subject system enforces privacy preserving data access by executing all contextual processing locally on the electronic device and permitting access to contextual data only if the requesting application or process has been explicitly authorized. The architecture of the query interface ensures that sensitive personal data remains under the user's control and is not transmitted off the electronic device thereby preserving user privacy while enabling intelligent context-aware functionalities.

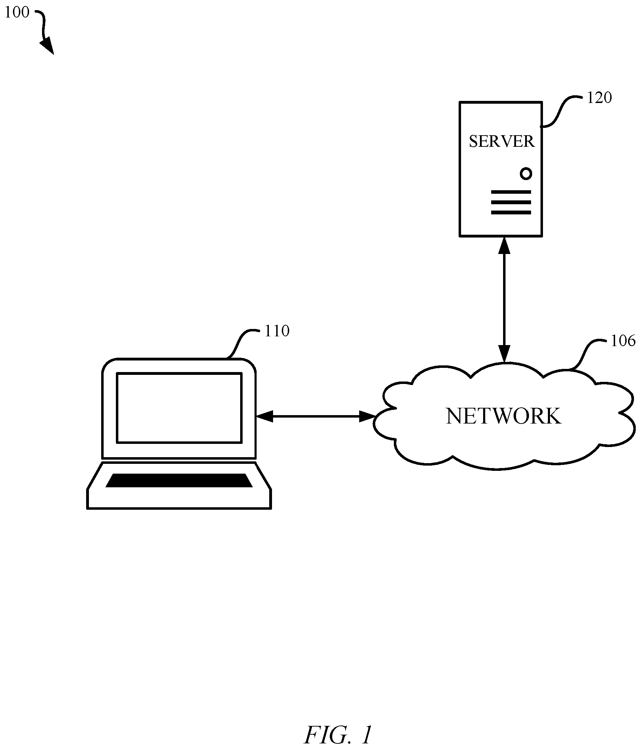

FIG. 1 illustrates an example network environment 100 in accordance with one or more implementations of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes an electronic device 110 (also referred herein to as an electronic device), and a server 120. The network 106 may communicatively (directly or indirectly) couple the electronic device 110 and/or the server 120. In one or more implementations, the network 106 may be an interconnected network of devices that may include, or may be communicatively coupled to, the Internet. For explanatory purposes, the network environment 100 is illustrated in FIG. 1 as including the electronic device 110, and the server 120; however, the network environment 100 may include any number of electronic devices and any number of servers.

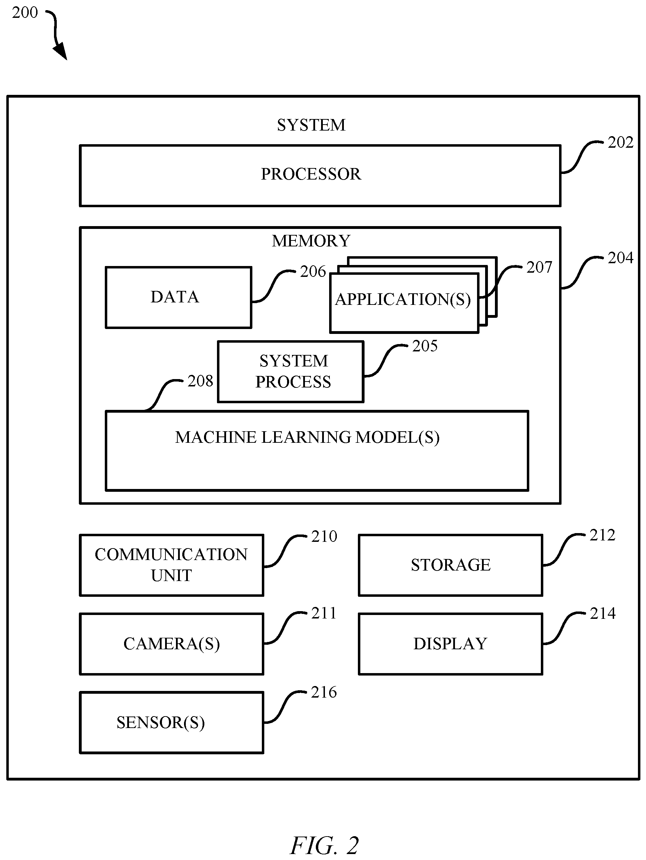

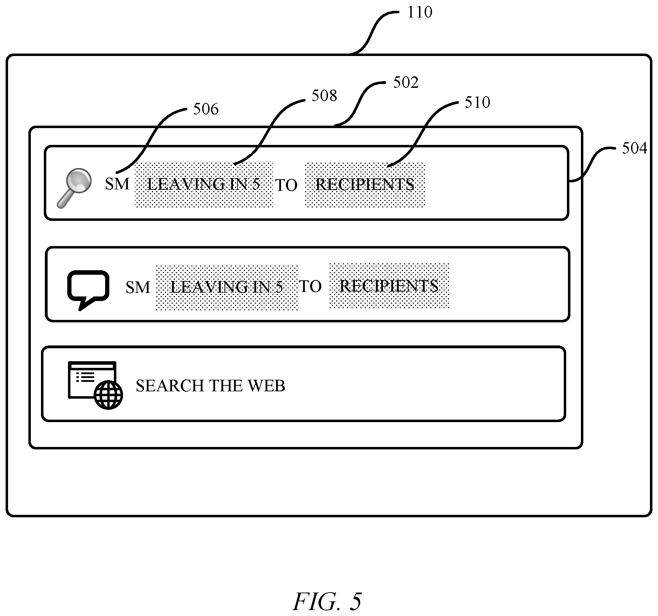

The electronic device 110 may be, for example, a desktop computer, a portable computing device such as a laptop computer, a smartphone, a peripheral device (e.g., a digital camera, headphones), a tablet device, a wearable device such as a watch, a band, and the like. In FIG. 1, by way of example, the electronic device 110 is depicted as a smartphone. The electronic device 110 may be, and/or may include all or part of, the systems discussed below with respect to FIG. 2 and/or FIG. 5.

In some implementations, the electronic device 110 may provide a system for training a machine learning model using training data, where the trained machine learning model is subsequently deployed locally at the electronic device 110. Further, the electronic device 110 may provide one or more frameworks for training machine learning models and/or developing applications using the machine learning models. In an example, the electronic device 110 may be an electronic device (e.g., a smartphone, a tablet device, a laptop computer, a desktop computer, a wearable electronic device, etc.) that can be used to communicate with entities like friends, family, colleagues.

In some implementations, a server 120 may provide a platform to train one or more machine learning models for deployment to the electronic device 110. The machine learning models deployed on the electronic device 110 may then perform one or more machine learning tasks. In some implementations, the server 120 may provide a cloud service that utilizes the trained machine learning model and is continually refined over time. The server 120 may be, and/or may include all or part of, the systems discussed below with respect to FIG. 2 and/or with respect to FIG. 5.

FIG. 2 illustrates an example system 200 in accordance with some implementations of the subject technology. In an example, the system 200 may be implemented in the electronic device 110 or the server 120. In another example, the system 200 may be implemented either in a single device or in a distributed manner in a plurality of devices, the implementation of which would be apparent to a person skilled in the art.

In an example, the system 200 may include a processor 202, memory 204 (memory device) and a communication unit 210. The memory 204 may store data 206 and one or more machine learning models 208A. In an example, the system 200 may include or may be communicatively coupled with a storage 212. Thus, the storage 212 may be either an internal storage or an external storage. In the example of FIG. 2, the system 200 includes one or more camera(s) 211, a display 214, and one or more sensors(s) 216. Sensor(s) 216 may include location sensors (e.g., satellite positioning system sensors), motion sensors (e.g., inertial sensors), and/or depth sensors (e.g., stereo cameras, LIDAR sensors, radar sensors, time-of-flight sensors, or the like).

In an example, the system 200 may execute a system process or service that performs core and/or auxiliary functions within the system 200, such as system-wide search functionality. The system process may perform operations such as sensor data acquisition, real-time processing of inputs from camera(s) or sensor(s) 216, machine learning inferences, communication handling and user interface rendering. The system process is typically managed by an operating system (OS) of the system 200 and is different from one or more applications 207 executing in the system 200. In one or more implementations, the system process may interact with the one or more applications 207 using an application programming interface (API). In one or more implementations, the system process may be an operating system process or daemon.

In an example, the processor 202 may be a single processing unit or multiple processing units. The processor 202 may be implemented as one or more microprocessors, microcomputers, microcontrollers, digital signal processors, central processing units (CPUs), graphics processing units (GPUs), neural processors, specialized processors, e.g., for training and/or evaluating machine learning models, such as large language models, state machines, logic circuitries, and/or any devices that manipulate signals based on operational instructions. Among other capabilities, the processor 202 is configured to fetch and execute computer-readable instructions and data stored in the memory 204.

In an example, the communication unit 210 may include one or more hardware units that support wired or wireless communication between the processor 202 and processors of other computing devices, and/or for communication over a telecommunication network.

The memory 204 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 may include one or more applications 207 that are currently being executed on the system 200, such as a system-wide search application. In one or more implementations, the system-wide search application may be a system level process, or the system-wide search application may be a first party or third party application process. The one or more applications 207 can interact with each other or with the operating system of the system 200 using application programming interfaces (API) to send or receive data. The one or more applications 207 can also include respective user interfaces (UI) to facilitate user-interaction, enabling the user to provide inputs and receive output seamlessly. For example, the one or more applications 207 can include an application 207A such as a creative application to generate or modify images (e.g., emojis, avatars, etc.,) for messaging applications and social media applications.

The data 206 may represent, amongst other things, a repository of data processed, received, and generated by one or more processors such as the processor 202. One or more of the aforementioned components of the system 200 may send or receive data, for example, using one or more input/output ports and one or more communication units.

In some embodiments, the data 206 can include information generated, processed, or stored by one or more applications 207 executing on the system 200. This data may include both static and dynamic information such as application configuration settings, application usage metrics, user generated content, application session metadata, application specific logs, and application activity states.

In some embodiments, application data may include historical user activity and content related to one or more applications 207. The user activity information can include records of prior actions performed by the user within the applications, capturing how the user interacts with recommended content and/or actions offered by the application. For example, the data may include logs of the user starting or completing a workout in a fitness application, submitting a form, accessing a particular screen or module, or interacting with recommended content and/or actions. The data can further include timestamps and application metadata, such as the device state, the application state and previously recommended and/or suggested content and/or actions by the one or more applications 207.

In some embodiments, data 206 may include recent and/or historical contextual data that describes the user's contextual state i.e., the user's environment or routine at a given moment in time. Contextual data may include temporal attributes (e.g., time of day, day of week, season), spatial attributes (e.g., GPS location, movement patterns, location categories - such as home, work or gym) and schedule based attributes (e.g., calendar events such as meetings or reminders). Additionally, contextual data may incorporate device specific states such as battery level, connectivity status, ambient conditions (e.g., light levels or environment noise). In some embodiments, contextual data can be provided by the one or more applications 207 or derived from application data and/or sensor data. In some embodiments, the contextual data can also include contextual information associated with the user account and other devices connected to the user account. Such contextual information may encompass cross device activity patterns, synchronized application usage history, shared calendar events, notification, cloud-based interaction logs. For example, if a user accesses a particular document on a tablet device associated with the user's account, that usage event may be recorded and associated with the user account, allowing the system 200 on a separate device (e.g., a smartphone or a laptop) associated with the user's account to incorporate that activity as a part of the user's contextual profile.

In some embodiments, data 206 may further include sensor data obtained from the one or more sensors 216 of the system 200. Such sensor data may include motion data (e.g., accelerometer or gyroscope data), biometric data (e.g., heart rate, skin temperature), environment data (e.g., ambient light, barometric pressure) or location data (e.g., GPS coordinates, location tags, addresses, pin codes, etc.) The sensor data may be used independently or in combination with application data to provide contextual information about the user's activity, environment, and psychological state.

In some embodiments, the system process 205 may use a database management software to facilitate the structured storage, retrieval, and manipulation of data 206. The database management software may be implemented using a relational database management system (RDBMS), a non-relational (NoSQL) system, or any other suitable data storage architecture that supports efficient data operations in accordance with the requirements of the system 200. In some embodiments, the data 206 may be organized into tables comprising rows and columns with defined relationships between data entities. Alternatively, in embodiments using a NoSQL database (e.g., key value store, document store or graph database,) the data may be stored in a flexible, schemeless formats to facilitate high speed access, scalability, and efficient representation of semi-structured or unstructured data.

The machine learning model(s) 208, in an example, may include one or more of machine learning (ML) based models and artificial intelligence-based models, such as, for example, a ML model 208A. The ML model 208A can be implemented on the system 200 of the electronic device 110 or the server 120 to determine a likelihood indicating a relevance of a search query or a portion of a query with one or more application(s) 207 or one or more application resources based on contextual information associated with the user. In some embodiments, the ML model 208A can be supervised, semi-supervised, or unsupervised. The ML model 208A may be based on regression learning, reinforcement learning, decision trees, random forest, support vector machines, neural-networks, or any suitable learning algorithms. In some embodiments, the system process 205 can use neural network-based ML model 208A for determining the relevance likelihood. As an example, and not by way of limitation, the neural network based ML model 208A may comprise one or more of transformers neural-networks, long-short term memory units, or recurrent neural networks, or any combination thereof. The ML model 208A may be trained on a data set that includes historical search queries, user interaction data, and metadata extracted from application resources accessible via the electronic device 110. Each training instance may include an input vector derived from query features (e.g., word embeddings, token, and sequences) contextual data (e.g., time of the day, device date, user activity patterns, etc.,) and metadata associated with the application resources (e.g., application type, content title, access frequency)

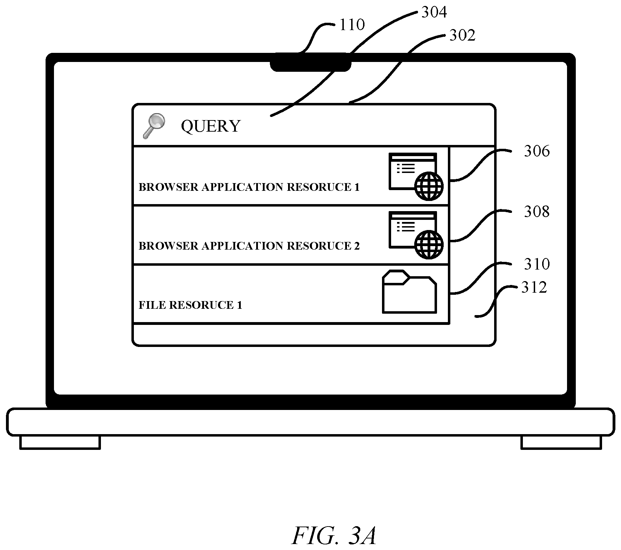

FIG. 3A is an example of a graphical user interface (UI) 302 provided for the system-wide search application on the electronic device 110 to access digital content. Digital content can include a wide variety of items on the electronic device (e.g., locally-stored items), including documents, pictures, music, applications, and system preferences. The system-wide search may further allow the user to search for web-based content, for example, as accessed by a browser or other application(s) installed on the device.

The UI 302 may include a UI element 304 (e.g., a search field) configured to receive user input (e.g., via a keyboard) which may receive a search query or a portion of the search query. The search query can include a string of one or more characters, words, or symbols intended to express a search term directed towards locating information, files, application content, web pages, or other digital resources accessible to the electronic device 110. Portion of the search query refers to a subset of the full query string. It may include a contiguous or non-contiguous segment of the query. The portion of the query may be received incrementally as the user types on the keyboard, or it may be analyzed independently of the remaining elements for the purpose of matching, filtering, or predicting relevant search results.

In some embodiments, in response to receiving a query, the system process 205 may evaluate the input to determine the most contextually relevant application associated with the query. The system process 205 can parse the query to identify one or more semantic or structural elements that may indicate a relationship to a particular application and/or application specific resource. For example, the system process 205 may receive a query such as "What is the weather like in Chicago tomorrow?" and parse the query to identify one or more semantic elements, including a subject entity "weather," a geographic location "Chicago" and a temporal modifier "tomorrow." Based on the presence of these elements, the system process 205 may determine that the query is associated with a web-based resource which is specific to a browser application. The system process 205 may evaluate each of the one or more application(s) 207 against the query using a set of matching criteria, which may include keyword associations, historical interactions, and application specific metadata to determine whether the query or the portion of the query corresponds to a known resource or interaction pattern previously associated with an application. In the case of a browser application, the system process may detect that the query or the portion of the query includes terms that match with webpage titles, domain names, or URL fragments, listed in the browser application's browsing history or bookmarks.

In some embodiments, the system process 205 may determine that the query or the one or more portions thereof, corresponds to resources associated with more than one application. For example, the query may contain terms that are semantically relevant to both a messaging application and a document editing application, each of which is associated with distinct resources. In case of a browser application, the query or the portion of the query may further correspond to multiple distinct web pages or web domains. For example, the system process 205 may determine that the query or the portion of the search query maps to several previously visited web pages, each from a different domain or multiple pages within the same domain.

In some embodiments, the system process 205 can query the one or more application(s) 207 to determine a relationship of the query or the portion of the query to a particular application and/or application specific resource. For example, the system process 205 can query each of the one or more application(s) 207 to match the query or the portion of the query with application resources, historical user interactions with the one or more applications and application specific metadata to determine whether the query or the portion of the query corresponds to a known resource or interaction pattern previously associated with an application. In response, the one or more applications 207 can return a response indicating the one or more application resources associated with the search query or the portion of the search query to the system process 205. In one or more implementations, the system process 205 may manage a system-wide index that includes application-specific resources provided by, or donated by the one or more applications.

For example, assume that the user previously visited a Wikipedia page titled "History of Artificial Intelligence" via the browser application installed on the electronic device 110. Upon receiving a search query such as "AI history" or a partial query such as "artificial intel," the system process 205 may query the browser application to determine whether the query or its portion corresponds to a previously visited web resource. The browser application may then evaluate the query against its browsing history and identify a match with the Uniform Resource Locator (URL) "https://en.wikipedia.org/wiki/history_of_artificial_intelligence." In response, the browser application can return the associated metadata such as the page title (e.g., "history of artificial intelligence,") the access timestamp, the visit frequency, and any user generated annotations (e.g., bookmarks or tags) to the system process 205.

In response to determining that the query or the portion of the query is matched with one or more application resources, the system process 205 can use the ML model 208A to determine the likelihood indicating a relevance of the search query or the portion of a query with one or more application resources based on contextual information associated with the user. The system process 205 can generate a set of features by processing the query or the portion of the query and the metadata associated with the matched application resources. For example, the system process 205 can process the query or the portion of the query to generate tokens or word embeddings. The system process 205 can also process the metadata of the matched application resources to generate a feature representation of the time of the day, user location, historical usage patterns, currently active applications on the electronic device 110, application resource metadata, such as application category, content type, access frequency, recency of use, and prior interaction metrics. The system process 205 can concatenate the set of features into a composite input vector and process the input vector through the ML model 208A to generate a relevance likelihood indicating the relevance of the portion of the query or the query with the respective application resource.

In some embodiments, the system process 205 or maybe configured to identify a set of application resources that are contextually relevant to the received query or the portion of the query by evaluating the relevance likelihood generated by the ML model 208A. Each relevance likelihood value may represent a predicted measure of the degree to which the particular application resource corresponds to the user's inferred intent determined based the contextual parameters associated with the user. Upon generating relevance likelihood values for each of the one or more applications, the system process 205 may apply a predefined or dynamically computed threshold to filter out applications that are contextually less relevant. For example, only those application resources with the likelihood exceeding the specified threshold value (e.g., 0.60 on a normalized scale from 0 to 1) may be considered contextually relevant and retained for further evaluation thereby disregarding application resources that exhibit weak or ambiguous semantic or behavioral association with the query. After filtering the results using the relevance threshold, the system process 205 may perform a ranking operation over the remaining set of contextually relevant application resources to determine application resources and the respective applications that exhibit the highest relevance likelihood.

In response to determining the application resources that exhibit the highest relevance likelihood, the system process 205 can display one or more user interface (UI) elements 306, 308, 310 to indicate the application resources such that the UI elements are arranged according to the ranked likelihoods determined by the system process 205.

. These UI elements may be rendered within the UI 302 associated with the system wide search application. In some embodiments, the UI elements 306, 308, 310 are arranged in an order that reflects the ranking of the application resources based on their relevance likelihoods. The arrangement may be such that the application resource with the highest likelihood i.e., the resource deemed most contextually relevant to the user is positioned most prominently within the UI 302 (e.g., at the top of a list or within a highlighted region of the UI 302.) The lower ranked resources may be displayed in descending order of relevance likelihood, allowing the user to quickly evaluate the most prominent results first. In some embodiments, the visual representation of the UI elements may vary depending on the resource type and associated metadata. For instance, a browser-based resource may display the web page title and domain name, whereas a file based resource may include a thumbnail file path, or last modified date. In some embodiments, the interactive UI elements may be provided within each UI element 306, 308, 310 (e.g., buttons for opening the application, previewing the application resource, or performing contextual actions) to facilitate the rapid user interaction.

In some embodiments, the user may interact with the UI elements 306, 308 or 310 to access the application resources via the associated applications. As described above, the UI elements 306, 308, 310 are configured to provide actionable entry points to specific application resources determined to be contextually relevant to the user's search query. Upon interaction (e.g., a tap, click or selection gesture,) the system process 205 can launch the corresponding application or bring the application to the foreground for display to the user on the electronic device 110. The system process 205 may cause the application to load the selected application resource, such as by making an API call to the application that indicates the selected application resource. For example, assume that the system process 205 determines a portion of the search query - e.g., "AI Revolution" - matches a previously visited website within a browser application. The system process 205 may query the browser's search history, bookmarks, or tabs and identify a match with a Wikipedia article titled "Artificial Intelligence - Wikipedia" located at "https://en.wikipedia.org/wiki/Artificial_intelligence". The web resource may be assigned a high relevance likelihood by the ML model 208A based on past interaction frequency, recency of access or semantic similarity to the search query. In response, the system process 205 may generate a corresponding UI element (e.g., the UI element 306) within the UI 302. This UI element may display the page title, URL fragment, and possibly a short content review. When the user selects the UI element 306, the system process 205 may trigger the browser application to open directly to the identified URL, restoring the session or loading the page in a new tab as appropriate.

In some embodiments, the system process 205 may recommend one or more applications 207, one or more actions and/or tasks performed by the one or more applications 207 (e.g., sending a message), or menu items provided by the one or more applications 207 (e.g., menu options provided by a document editing application,) images, prior communications, etc. For brevity, the one or more applications 207, the one or more actions and/or tasks performed by the one or more applications 207, images and the prior communications are referred to as items. When the user of the electronic device 110 logs into the account of the user thereby accessing the electronic device 110, the system process 205 may provide these item recommendations for display on the electronic device 110. These recommendations may be generated without requiring any explicit input from the user and are intended to anticipate the user's likely intentions of tasks based on historical activity of the user, contextual information associated with the user and usage patterns. For example, the system process 205 can use the system-wise search application to generate recommendations for the user, as soon as the user logs into the electronic device 110 and without requiring the user to provide any input.

The system process 205 may utilize contextual data (e.g., time of the day, user's location, recent application usage, history, calendar events, etc.,) to determine which of the items are most relevant to the user. For example, if a user typically opens a document editing application and resumes work on a particular file each morning, the system process 205 may proactively surface or recommend both the document editing application and the specific document. As for another example, if the user has an ongoing conversation in a messaging application or an e-mail draft which is pending completion, the system process 205 can recommend these items..

In some embodiments, the system process 205 may generate a feature vector to represent these items and the contextual information associated with the user of the electronic device 110. Each feature vector maybe a structured representation that captures key contextual and behavioral features associated with the user with respect to the items. These features may include contextual attributes such as time of the day, location, device state, calendar events, user activity metrics such as frequency and recency of interaction with each application 207, engagement duration, application type, content category, file format, etc.

In some embodiments, the system process 205 can process the feature vectors using the ML model 208A to generate a likelihood indicating the relevance likelihood of each of the items to the user. Based on the generated relevance likelihoods, the system process 205 may generate recommendations that includes items deemed most relevant under the current user context. In some embodiments, system process 205 may apply a predefined or dynamically adjusted threshold to filter out items with relevance likelihoods that do not meet the threshold to ensure that only items with sufficiently high relevance are selected for recommendation. Once filtered, the system process 205 can rank the remaining items - for example, in descending order of their likelihoods.

In some embodiments, the system process 205 may display the recommended items in the UI according to their respective rankings, which are determined based on the relevance likelihoods generated by the ML model 208A. The items with the highest likelihoods are presented in a more prominent position such as at the top of the vertically ordered list, with a prioritized grid layout and/or in a portion of the UI 302 pre-configured for presenting recommendations (e.g., UI element 312). For example, if a user frequently opens a spreadsheet application to update a financial report every Monday morning, and the ML model 208A assigns the spreadsheet application and the financial report a high relevance likelihood, both items may appear at the topmost position within portion of the UI 302 pre-configured for presenting recommendations (e.g., UI element 312) upon login. Similarly, the system process 205 might display a messaging application with the ongoing conversation, followed by a recently captured camera image that the user often shares, and then a draft e-mail left unsent the previous day. The system process 205 may display these items within portion of the UI 302 pre-configured for presenting recommendations (e.g., UI element 312) according to the descending order of likelihood, allowing the user to quickly engage with the most contextually relevant resources.

In some embodiments, the system process 205 may additionally recommend one or more menu items provided by the one or more applications 207 as a recommendation to user. For example, if the user is using a document editing application to edit a document, the system process 205 can use the ML model 208A to generate a likelihood for each of the menu items provided by the document editing application. For example, the system process 205 can generate a likelihood for a menu item that adjusts the font size of the letters and characters of a document, or a font style, or alignment. Depending on the user's past user activity, the ML model 208A can generate a relevance likelihood for each of the menu items and display them as recommendations to the user using the system-wide search application when the user is using the document editing application. For example, while the user is editing a document, the user may initiate a system search and provide a portion of a query. Based on the portion of the query and the user's current context of editing a document, the system process 205 can generate these recommendations and display them to the user. If the user interacts with any of the recommendations to select a menu items (e.g., text alignment to left,) the system process 205 can pass the indication of the user's selection to the document editing application. In response, the document editing application can perform the action associated with the selected menu item.

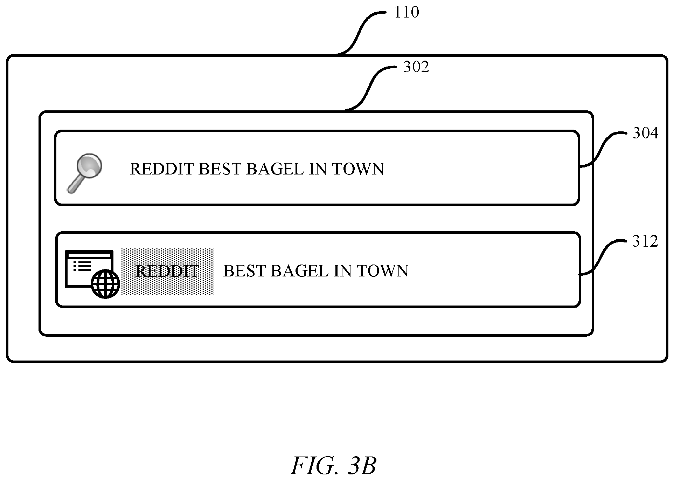

In some embodiments, the system process 205 may additionally determine whether the identified web resource supports a search functionality, for example by using a searchable interface, a known search endpoint or embedded search functionality. In some embodiments, the system process 205 can query one or more third party servers or an internal database to determine whether a portion of query corresponds to a known web resource. For example, the system process 205 may access an index or metadata registry containing information about commonly accessed web domains and their associated capabilities, including whether they support embedded or site specific search functionality. Additionally, the system process 205 may perform an active or passive evaluation of the web resource. This may include querying the web resource to determine whether the web resource supports search functionality. Alternatively, the system process 205 may rely on pre-existing metadata to identify whether a domain is known to support search functionality. Upon determining that the web resource supports a search functionality, the system process may generate a recommendation for the user that enables a search within the resource. This is further explained with reference to FIG. 3B.

FIG. 3B is an example of a graphical user interface (UI) 302 provided by the system process 205 for the system-wide search application on the electronic device 110 to display recommendations on the electronic device 110. The user may provide a query "Reddit best bagel in town" via the UI element 304. In response, the system process 205 can determine that "Reddit" is a web resource that supports search functionality, such as through a site specific search interface or embedded search feature. In such embodiments, if the system process 205 is unable to identify a previously visited or bookmarked web page that directly corresponds to the query portion "best bagel in town," the system process 205 may evaluate the relevance of performing a search within the web resource "Reddit." The system process 205 may generate a feature vector that encodes relevant attributes including the identified web source "Reddit," "the query" and the contextual information associated with the user (e.g., time of the day, location, browsing history, or interaction patterns) The system process 205 processes this feature vector is processed using the ML model 208A to generate a relevance likelihood indicating the contextual relevance of performing a search within "Reddit" using the provided query. If the generated likelihood exceeds a prespecified threshold, the system process 205 may present "Reddit" as a recommended item via the UI element 312. If the electronic device 110 receives an input selecting the UI element 312, the system process 205 may launch the browser application or bring the browser application to the foreground for display to the user on the electronic device 110 and search the web resource using the query portion indicating the search terms "best bagel in town".

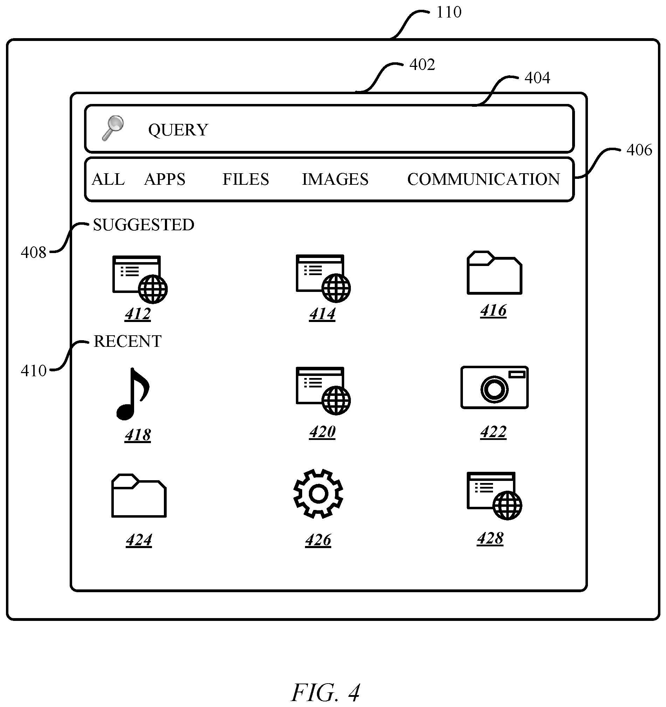

In some embodiments, the system process 205 may generate recommendations by organizing the items according to their respective types, thereby enhancing the clarity and usability of the UI. For example, the system process 205 may categorize the items into distinct groups such as applications, files, images, communications, and application specific actions. This type based grouping allows the user to locate the relevant content more efficiently with each category. Additionally, the system process 205 may further refine recommendations based on the recency of use of the items prioritizing those that the user has interacted with most recently. This is further explained with reference to FIG. 4.

FIG. 4 is an example of a graphical user interface (UI) 402 provided by the system process 205 for the system-wide search application to display recommendations on the electronic device 110. These recommendations can include recommendations of applications, actions and/or task performed by one or more applications 207, menu items that can be performed and/or provided by one or more applications 207, digital content such as music, movies, etc. In some embodiments, the system process 205 may reference a library or catalog of tasks, actions, and/or menu items that can be performed and/or provided by one or more applications on the device.

The UI 402 includes a UI element 404 configured to receive a search query from the user enabling both manual input and incremental query based interactions. Additionally, the UI 402 includes a UI element 406 representing a set of selectable tabs or categories, each corresponding to a distinct type of item - such as one or more applications 207, actions and/or tasks performed by those applications, files, images, prior communications, and other content types. In response to receiving a user input indicating an interaction with a particular tab or item type, the system process 205 can dynamically update the UI 402 to display recommendations specific to that category. These recommendations may be generated by the system process 205 using the ML model 208A that indicate the contextual relevance of each item to the user. Additionally, the UI elements 412 through 416 are shown under the suggested recommendations section 408 and are displayed in an order that reflects the respective relevance likelihoods, with the most relevant items appearing first. The UI 402 may also display a separate section 410 that includes items that were recently used by the user. In this section, the UI elements 418 through 428 may represent recent activities across various item types and are likewise ordered according to the relevance likelihoods generated by the ML model 208A.

In some embodiments, the system search application may be configured to assign a predefined label to an application or a task to be performed by an application or the system process 205. These labels serve as identifiers that indicate the intent or functionality of the corresponding task or resource. When a user provides a first user input that includes a portion of a query in the search field (e.g., a keyword or a phrase), the system process 205 can determine whether the input corresponds to a predefined label associated with an application or an action performed by an application or the system process 205.

In some embodiments, the system process 205 can recognize a task to be performed by an application or the system process 205 by comparing the first user input to the predefined labels stored in the electronic device 110. Upon recognizing the task associated with the label, the system process 205 can infer the user's intent and initiate further processing to facilitate task completion which includes determining one or more additional parameters required to execute or complete the task based on the user's current contextual data and the one or more additional parameters specified by the application. This is further explained with reference to FIG. 5.

FIG. 5 is an example of a graphical user interface (UI) 502 provided by the system process 205 for the system-wide search application to determine the one or more additional parameters required to execute or complete the task based on the user's current contextual data. The UI 502 includes a UI element 404 configured to receive a query from the user. As described above, the system search application may be configured to assign a predefined label to an application, an action performed by that application or the system process 205. These labels serve as identifiers that indicate the intent or functionality of the corresponding task or resource. When a user provides a first user input that includes a portion of a query in the search field (e.g., a keyword or a phrase), the system process 205 can determine whether the input corresponds to a predefined label associated with an application, an action performed by an application or the system process 205. For example, the UI element 504 can receive as input a portion 506 of a query the keyword "SM." In this example, the keyword "SM" indicates the task of sending a message using a messaging application.

In response to determining that the portion 506 of a query corresponds to a task, the system process 205 may initiate a query to the application associated with the identified task to obtain one or more additional parameters necessary for completing the task. Upon receiving the query, the application may evaluate the task and return an indication of one or more additional parameters that are necessary for successful task execution. Continuing with the example of the messaging application, the messaging application may respond to the query by identifying the two additional parameters - namely the message text and the recipient. In response, the system process 205 may update the UI element 504 to reflect the parameter requirements by dynamically rendering one or more UI elements - such as the UI element 508 and 510, each of which corresponds to one of the required parameters. These UI elements 508 and 510 may prompt the user to provide the missing parameters through text entry fields, selection menus, or other interactive components.

In some embodiments, the system process 205 can generate a feature vector to encode the task, the user's contextual information and one of the possible values for an additional parameter required for the execution of the task. The feature vector may include multiple features that collectively represent the task, the task specific execution requirements, and the user's current context. These features may include but are not limited to, an identifier of the task to be performed, an identifier of the application associated with the task, at least one additional parameter required for the task completion (determined through the application specific querying or predefined task templates), a candidate value for the additional parameter and contextual attributes associated with the user, such as time of the day, current location, historical interaction data, device state, and recent user activity.

The system process 205 may process this feature vector using the ML model 208A to generate a relevance likelihood indicating the contextual relevance of the candidate value for the additional parameter with the current context of the user. Similarly, the system process 205 may generate multiple such feature vectors, each incorporating a different candidate value for the same additional parameter and generate the corresponding relevance likelihoods. Based on these generated likelihoods, the system process 205 may identify the most contextually relevant candidate values and present them to the user as selectable options via the UI 502.

Continuing with the example of sending a message, the system process may construct multiple feature vectors, each encoding the task identifier, an indication of the associated messaging application, one of the additional parameters (e.g., the text of the message, the recipient,) a candidate value for the parameter, and contextual information such as the current time (e.g., 4:55 PM,) a scheduled a calendar event at 5:00 PM, the user's recent departure from a known location, and historical communication patterns. The feature vector that includes the candidate value ("leaving in 5") for the parameter message text, can be processed by the ML model 208A to generate a high relevance likelihood based on the contextual alignment with the upcoming calendar event and the past usage. Likewise, the candidate recipients such as "Alex," "Emma" and "John" are evaluated using similar feature vectors. The ML model 208A may determine that "Alex" has the highest relevance likelihood, based on prior communications about similar events. In response, the system process 205 may then display UI elements 508 and 510 prefilled with the messaging text "leaving in five" and the suggested recipient "Alex" allowing the user to accept or modify these values and complete the task with minimal input.

In some embodiments, the system process 205 may determine one or more candidate values for each of the additional parameters required to complete the task, based on their generated relevance livelihoods. The system process may identify the candidate values if the generated likelihoods exceed a predefined or dynamically adjusted threshold, indicating high contextual relevance to the user's current context. These options may then be displayed to the user within the UI 502, allowing the user to select one of the candidate values. These candidate values may be presented in a prioritized manner ordered according to their respective relevance likelihoods.

In some embodiments, one or more applications 207 and the system process 205 may access contextual information associated with the user of the electronic device 110 to provide personalized recommendations of digital content or actions based on the user's contextual environment. The contextual information may include but is not limited to temporal attributes (e.g., time of the day, day of the week,) spatial attributes (e.g., location, movement patterns,) user activity history (e.g., prior application usage, document usage,) device state (e.g., battery level, connectivity) and relational entities associated with the user (e.g., contacts family members and collaborators.) In some embodiments, contextual information is obtained from a database implemented on the electronic device 110 which provides a queryable interface that integrates data from a multiple data sources. These sources may include, but are not limited to, structured data sources (e.g., calendar, contacts,) event based streams (e.g., app launch logs, screen interactions,) and external sources (e.g., cloud based interactions.) In some embodiments, the database is a relational database providing a unified schema and a query layer that allows applications 207 and system process 205 to retrieve contextual data without directly interacting with the individual data sources.

In some embodiments, the system process 205 is configured to receive from one or more applications 207, one or more data streams indicating discrete, temporally ordered user interactions or behavioral signals. Data stream may correspond to distinct applications or subsystems, and each record in the stream indicates one or more attributes characterizing the specific instance of user engagement. For example, a record in a first stream may indicate that a user launched a messaging application at a particular timestamp, while another stream may indicate that the user initiated a media playback using a music application or modified a document with a document editing application.

In some embodiments, the system process 205 is configured to associate data extracted from a data stream with a corresponding schema definition. These schema types may include but are not limited to, a user schema that defines the attributes and relationships relevant to the user (e.g., user behavioral patterns,) an application schema that defines user interactions with the one or more applications 207 executing on the electronic device 110 and other devices connected to an user account and an event schema that defines user actions or events experienced by the user. In some embodiments, the schema definitions are stored in a catalog that resides on the electronic device 110 and defines the semantic structure of database table (also referred to as a view). Each schema specifies one or more attribute fields such as timestamp, user activity type, application identifier, application usage duration and additionally include rules for normalization, transformation, and attribute derivation. For example, a schema associated with an application launch stream may define attributes such as application identifier, launch timestamp, etc. The system process 205 can use the schema to extract structured information from the data streams to generate a corresponding structured record. Likewise, a media interaction stream may include a schema that defines attributes such as media identifier, media type, action type (e.g., play, pause), and usage duration. In some embodiments, different types of schemas can include a schema associated with the user, a schema associated with the one or more applications and a schema associated with the events experienced by the user.

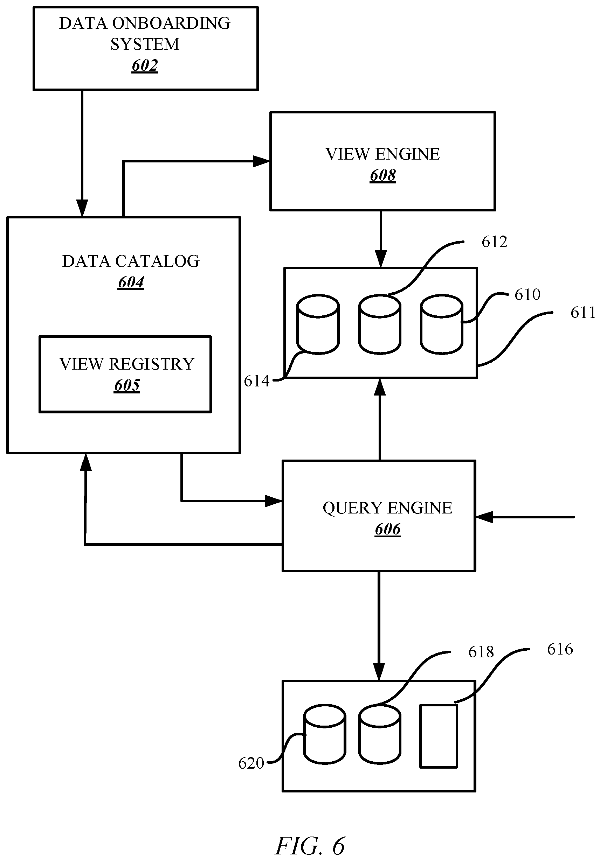

FIG. 6 is an example framework implemented on the electronic device 110 for providing contextual information associated with the user. In some embodiments, a data onboarding system 602 is configured to provide information associated with new data streams when new data streams are available for inclusion in the database. Once new data streams becomes available, the one or more data streams are processed by the view engine 608 based on the schema definitions provided by the data catalog 604.

In some embodiments, the system process 205 can store a data record (e.g., a record indicating an event, a relationship etc.) in one or more database tables or views. In some embodiments, these views correspond to contextual abstractions such as recently used application, frequently contacted individuals, etc. In some embodiments, the views stored in the database 611 are queryable tables generated by the view engine 608 by processing the one or more data streams 618 (e.g., application usage data streams, user activity streams, etc.,) and contextual data from one or more applications 620 (e.g., calendar or messaging applications, etc.,) and one or more servers 616 (e.g., cloud-based servers). In other words, the views represent a derivation or an aggregation that captures aspects of user behavior and preferences. For example, a view associated with recently used applications may aggregate application launch events from the application launch data stream, along with metadata such as duration of use, frequency of application invocation, etc. These views are incrementally maintained by the system process 205 or by a view engine 608 which ensures that the views are updated according to the input data streams in near real time or during scheduled update intervals.

In some embodiments, the system process 205 may use the view engine 608 to generate multiple categories of views, including but not limited to a knowledge graph (KG) view, an application view, and a user view. Each of these views correspond to a distinct type of data and is generated from one or more underlying data sources, and is optimized for query based access by one or more applications 207 and/or the system process 205. In some embodiments, the KG views 610 may represent structured tables derived from a knowledge graph that includes entities and relationships that are inferred or extracted from user data (e.g., contacts, messages, calendar, etc.) The KG view 610 may also indicate relationships between one or more entities (e.g., family, or organizational hierarchies,) or labeled entities (e.g., mother, manager, frequent collaborator, etc.) In some embodiments, the KG views are incrementally maintained and updated as new information becomes available from data streams. For example, if the user labels someone as friend in the contacts application, this update may be propagated into the knowledge graph and automatically reflected in the KG view 610 associated with the user's friend.

In some embodiments, the system process 205 can generate application views 612 which are structured queryable representations of behavioral, or interaction data captured over time from the one or more data streams. These sources may include streams of user activities such as application launches, media playback, notification interactions, screen time measurements and other temporal signals indicating how the user interacts with the electronic device 110 or the one or more applications 207. In some embodiments, the application views 612 may provide aggregated information associated with events (e.g., app launches, app termination, messaging, etc.,) such as most recently used applications, frequently visited places or recent activity sessions. In some embodiments, the application views 612 may be incrementally updated by the view engine 608 as new event information are received from the data streams.

In some embodiments, processing the one or more data streams to determine events experienced by the user, and/or events that occurred in associated with the electronic device 110 (and/or other devices associated with the user), includes analyzing the streams of data provided by the applications 207 and the sensors on the electronic device 110. Each data stream may represent a sequence of timestamped observations, such as application launches, device state transitions, user inputs, motion detections or communication activities. The system process 205 can use the view engine 608 to process these data streams to apply one or more transformations, filtering, enrichment operations to extract semantically meaningful activity patterns.

In some embodiments, the system process 205 can determine events experienced by the user by identifying and extracting a set of event attributes from the data streams or application data, where the attributes may include but are not limited to an event type (e.g., application launch, device interaction, calendar meeting,) a location attribute (e.g., a GPS coordinates, a label associated with a location,) a timestamp (e.g., a date and time of occurrence) and one or more other indicators (e.g., network connection, battery level, current activity state.)

In some embodiments, the system process 205 may determine the events experienced by the user by aggregating and correlating local data streams with remote data sources. For example, the system process 205 may query one or more external servers (e.g., cloud-based servers) to retrieve supplemental metadata related to the time or location of the local event. Such metadata may include calendar entries, traffic status, weather conditions, public holidays, or external notifications.

In some embodiments, the system process 205 can generate user views 614 which are structured queryable representations associated with individuals, activities, preferences, or behavioral patterns specific to the user of the electronic device 110. The user view 614 are generated and maintained by the view engine 608 by processing the one or more data streams updated incrementally in response to changes in underlying data. For example, a user view may include a table such as a user relationship view that encodes interpersonal relationships between the user of the electronic device 110 and other entities.

In some embodiments, a view registry 605 can provide metadata to the view engine 608 for generating the views (e.g., the KG views 610, the application views 612, and the user views 614.) The metadata may include code (or computational and/or transformational logic) used by the view engine 608 to process the data streams to generate views and scheduling information associated with updating the views.

In some embodiments, the system process 205 or an application may issue a request for user specific contextual information such as recent communication (e.g., messages, emails, etc.), behavioral patterns (e.g., workout, application specific user activity) or environmental state (e.g., user location). This request is received by the query engine 606. In some embodiments, the query engine 606 may serve as an intermediary between the requesting entity and the underlying database system, which includes various views (e.g., KG views 610, application views 612 and user views 614). After receiving the request, the query engine 606 can parse the query to determine the specific contextual data being requested and refers to the data catalog 604 which stores schema definitions for all available views and tables in the database 611.

As described above, the data catalog 604 acts as a registry which includes metadata describing each view (e.g., table name, attributes names and types, relationships with other views or tables) and associated access control policies. The query engine 606 can use the metadata to resolve which views or tables are required to retrieve the requested contextual data. In response the query engine 606 can generate a query to retrieve the requested contextual information. Before executing the query, the query engine 606 can perform an access control check to ensure that the requesting process or application is authorized to retrieve the requested data. Specifically, the query engine 606 may consult the data catalog 604 to check whether the requesting process or application has the necessary permissions to access the requested information. If access control conditions are met, the query engine 606 proceeds with executing the query on the database 611. If the access control conditions are not met, the query is denied or truncated to exclude restricted data.

For example, the system process 205 may receive a request from an application (e.g., a personal assistant or a messaging application) to show recent messages from the most frequently contacted people. In response, the system process 205 may relay the query to the query engine 606. The query engine 606 can interact the data catalog 604 to determine which views or tables are required to retrieve the requested contextual data. Before executing the query, the query engine 606 can verify whether the requesting application has appropriate access rights to the identified views or tables. If the application is authorized to access the requested contextual data, the query engine 606 may proceed to construct and optimize a composite query (e.g., a SQL query) that joins the relevant tables or views. The query engine 606 can then execute the query against the appropriate data views to generate a language ranked list of recent messages of the most frequently contacted individuals. The result is then returned to the requesting application which may display the information to the user of the electronic device 110.

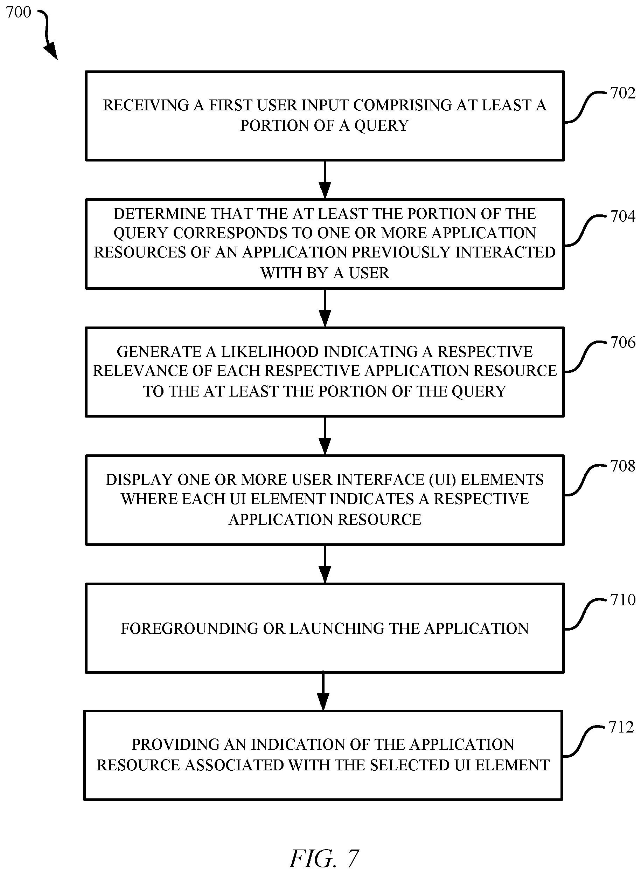

FIG. 7 is a flowchart illustrating an example process 700 for generating a recommendation of digital contents in response to receiving an input query. For explanatory purposes, the process 700 is primarily described herein with reference to the electronic device 110 and server 120 of FIG. 1. However, the process 700 is not limited to the electronic device 110 and the server 120 of FIG. 1, and one or more blocks (or operations) of the process 700 may be performed by one or more other suitable devices. Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations.

At block 702, the system process 205 receives a first user input comprising at least a portion of a query. for example, the UI 302 may include a UI element 304 (e.g., a search field) configured to receive user input (e.g., via a keyboard) which may receive a search query or a portion of the search query. The search query can include a string of one or more characters, words, or symbols intended to express a search term directed towards locating information, files, application content, web pages, or other digital resources accessible to the electronic device 110. Portion of the search query refers to a subset of the full query string. It may include a contiguous or non-contiguous segment of the query. The portion of the query may be received incrementally as the user types on the keyboard, or it may be analyzed independently of the remaining elements for the purpose of matching, filtering, or predicting relevant search results.

At block 704, the system process determines that the at least the portion of the query corresponds to one or more application resources of an application previously interacted with by a user. For example, in response to receiving a query, the system process 205 may evaluate the input to determine the most contextually relevant application associated with the query. The system process 205 can parse the query to identify one or more semantic or structural elements that may indicate a relationship to a particular application and/or application specific resource. For example, the system process 205 may receive a query such as "What is the weather like in Chicago tomorrow?" and parse the query to identify one or more semantic elements, including a subject entity "weather," a geographic location "Chicago" and a temporal modifier "tomorrow." Based on the presence of these elements, the system process 205 may determine that the query is associated with a web-based resource which is specific to a browser application. The system process 205 may evaluate each of the one or more application(s) 207 against the query using a set of matching criteria, which may include keyword associations, historical interactions, and application specific metadata to determine whether the query or the portion of the query corresponds to a known resource or interaction pattern previously associated with an application. In the case of a browser application, the system process may detect that the query or the portion of the query includes terms that match with webpage titles, domain names, or URL fragments, listed in the browser application's browsing history or bookmarks.

The system process 205 may determine that the query or the one or more portions thereof, corresponds to resources associated with more than one application. For example, the query may contain terms that are semantically relevant to both a messaging application and a document editing application, each of which is associated with distinct resources. In case of a browser application, the query or the portion of the query may further correspond to multiple distinct web pages or web domains. For example, the system process 205 may determine that the query or the portion of the search query maps to several previously visited web pages, each from a different domain or multiple pages within the same domain.

The system process 205 can query the one or more application(s) 207 to determine a relationship of the query or the portion of the query to a particular application and/or application specific resource. For example, the system process 205 can query each of the one or more application(s) 207 to match the query or the portion of the query with application resources, historical user interactions with the one or more applications and application specific metadata to determine whether the query or the portion of the query corresponds to a known resource or interaction pattern previously associated with an application. In response, the one or more applications 207 can return a response indicating the one or more application resources associated with the search query or the portion of the search query to the system process 205. In one or more implementations, the system process 205 may manage a system-wide index that includes application-specific resources provided by, or donated by the one or more applications.

For example, assume that the user previously visited a Wikipedia page titled "History of Artificial Intelligence" via the browser application installed on the electronic device 110. Upon receiving a search query such as "AI history" or a partial query such as "artificial intel," the system process 205 may query the browser application to determine whether the query or its portion corresponds to a previously visited web resource. The browser application may then evaluate the query against its browsing history and identify a match with the Uniform Resource Locator (URL) "https://en.wikipedia.org/wiki/history_of_artificial_intelligence." In response, the browser application can return the associated metadata such as the page title (e.g., "history of artificial intelligence,") the access timestamp, the visit frequency, and any user generated annotations (e.g., bookmarks or tags) to the system process 205.

At block 706, the system process 205 generates a likelihood indicating a respective relevance of each respective application resource to the at least the portion of the query. For example, in response to determining that the query or the portion of the query is matched with one or more application resources, the system process 205 can use the ML model 208A to determine the likelihood indicating a relevance of the search query or the portion of a query with one or more application resources based on contextual information associated with the user. The system process 205 can generate a set of features by processing the query or the portion of the query and the metadata associated with the matched application resources. For example, the system process 205 can process the query or the portion of the query to generate tokens or word embeddings. The system process 205 can also process the metadata of the matched application resources to generate a feature representation of the time of the day, user location, historical usage patterns, currently active applications on the electronic device 110, application resource metadata, such as application category, content type, access frequency, recency of use, and prior interaction metrics. The system process 205 can concatenate the set of features into a composite input vector and process the input vector through the ML model 208A to generate a relevance likelihood indicating the relevance of the portion of the query or the query with the respective application resource.

At block 708, the system process 205 displays one or more user interface (UI) elements where each UI element indicates a respective application resource. For example, the system process 205 or maybe configured to identify application resources that are contextually relevant to the received query or the portion of the query by evaluating the relevance likelihood generated by the ML model 208A. Each relevance likelihood value may represent a predicted measure of the degree to which the particular application resource corresponds to the user's inferred intent determined based the contextual parameters associated with the user. Upon generating relevance likelihood values for each of the one or more applications, the system process 205 may apply a predefined or dynamically computed threshold to filter out applications that are contextually less relevant. For example, only those application resources with the likelihood exceeding the specified threshold value (e.g., 0.60 on a normalized scale from 0 to 1) may be considered contextually relevant and retained for further evaluation thereby disregarding application resources that exhibit weak or ambiguous semantic or behavioral association with the query. After filtering the results using the relevance threshold, the system process 205 may perform a ranking operation over the remaining set of contextually relevant application resources to determine application resources and the respective applications that exhibit the highest relevance likelihood.

In response to determining the application resources that exhibit the highest relevance likelihood, the system process 205 can display one or more user interface (UI) elements 306, 308, 310 to indicate the application resources such that the UI elements are arranged according to the ranked likelihoods determined by the system process 205.

These UI elements may be rendered within the UI 302 associated with the system wide search application. In some embodiments, the UI elements 306, 308, 310 are arranged in an order that reflects the ranking of the application resources based on their relevance likelihoods. The arrangement may be such that the application resource with the highest likelihood i.e., the resource deemed most contextually relevant to the user is positioned most prominently within the UI 302 (e.g., at the top of a list or within a highlighted region of the UI 302.) The lower ranked resources may be displayed in descending order of relevance likelihood, allowing the user to quickly evaluate the most prominent results first. In some embodiments, the visual representation of the UI elements may vary depending on the resource type and associated metadata. For instance, a browser-based resource may display the web page title and domain name, whereas a file based resource may include a thumbnail file path, or last modified date. In some embodiments, the interactive UI elements may be provided within each UI element 306, 308, 310 (e.g., buttons for opening the application, previewing the application resource, or performing contextual actions) to facilitate the rapid user interaction.

At block 710, the system process 205 may foreground or launch the application. For example, the user may interact with the UI elements 306, 308 or 310 to access the application resources via the associated applications. As described above, the UI elements 306, 308, 310 are configured to provide actionable entry points to specific application resources determined to be contextually relevant to the user's search query. Upon interaction (e.g., a tap, click or selection gesture,) the system process 205 can launch the corresponding application or bring the application to the foreground for display to the user on the electronic device 110. The system process 205 may cause the application to load the selected application resource, such as by making an API call to the application that indicates the selected application resource. For example, assume that the system process 205 determines a portion of the search query - e.g., "AI Revolution" - matches a previously visited website within a browser application. The system process 205 may query the browser's search history, bookmarks, or tabs and identify a match with a Wikipedia article titled "Artificial Intelligence - Wikipedia" at "https://en.wikipedia.org/wiki/Artificial_intelligence". The web resource may be assigned a high relevance likelihood by the ML model 208A based on past interaction frequency, recency of access or semantic similarity to the search query. In response, the system process 205 may generate a corresponding UI element (e.g., the UI element 306) within the UI 302. This UI element may display the page title, URL fragment, and possibly a short content review.

At block 712, the system process 205 provides an indication of the application resource associated with the selected UI element. For example, when the user selects the UI element 306, the system process 205 may trigger the browser application to open directly to the identified URL, restoring the session or loading the page in a new tab as appropriate.

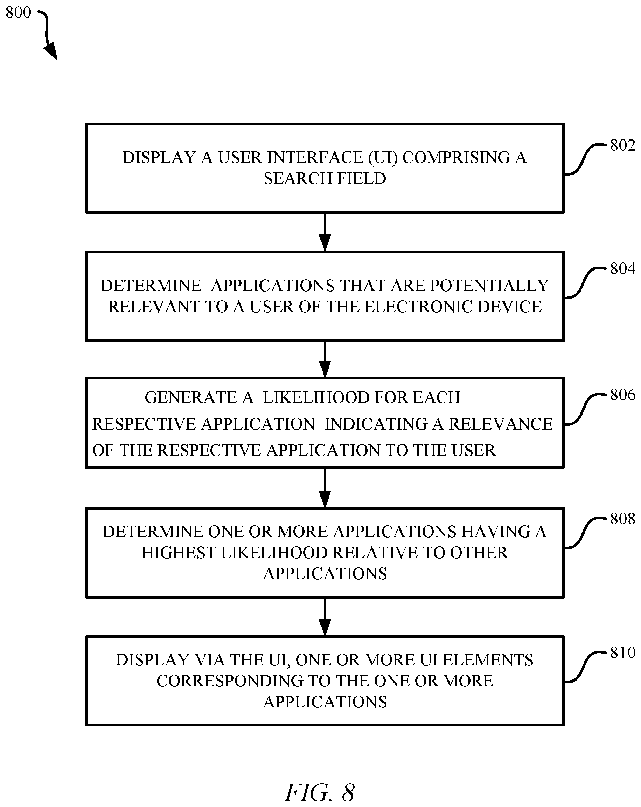

FIG. 8 is a flowchart illustrating an example process 800 for generating a recommendation of digital contents prior to receiving an input query. For explanatory purposes, the process 800 is primarily described herein with reference to the electronic device 110 and server 120 of FIG. 1. However, the process 800 is not limited to the electronic device 110 and the server 120 of FIG. 1, and one or more blocks (or operations) of the process 800 may be performed by one or more other suitable devices. Further for explanatory purposes, the blocks of the process 800 are described herein as occurring in serial, or linearly. However, multiple blocks of the process 800 may occur in parallel. In addition, the blocks of the process 800 need not be performed in the order shown and/or one or more blocks of the process 800 need not be performed and/or can be replaced by other operations.

At block 802, the system process 205 displays a user interface (UI) comprising a search field. For example, the system process 205 may recommend one or more applications 207, one or more actions and/or tasks performed by the one or more applications 207 (e.g., sending a message), or menu items provided by the one or more applications 207 (e.g., menu options provided by a document editing application,) images, prior communications, etc. For brevity, the one or more applications 207, the one or more actions and/or tasks performed by the one or more applications 207, images and the prior communications are referred to as items. When the user of the electronic device 110 logs into the account of the user thereby accessing the electronic device 110, the system process 205 may provide these item recommendations for display on the electronic device 110. These recommendations may be generated without requiring any explicit input from the user and are intended to anticipate the user's likely intentions of tasks based on historical activity of the user, contextual information associated with the user and usage patterns. For example, the system process 205 can use the system-wise search application to generate recommendations for the user, as soon as the user logs into the electronic device 110 and without requiring the user to provide any input. to display the recommended items, the system process 205 can display a UI 402 includes a UI element 404 configured to receive a search query from the user enabling both manual input and incremental query based interactions. Additionally, the UI 402 includes a UI element 406 representing a set of selectable tabs or categories, each corresponding to a distinct type of item - such as one or more applications 207, actions and/or tasks performed by those applications, files, images, prior communications, and other content types. In response to receiving a user input indicating an interaction with a particular tab or item type, the system process 205 can dynamically update the UI 402 to display recommendations specific to that category.

At block 804, the system process 205 determines applications that are potentially relevant to a user of the electronic device. For example, the system process 205 can use the system-wise search application to generate recommendations for the user, as soon as the user logs into the electronic device 110 and without requiring the user to provide any input.

At block 806, the system process 205 generates a likelihood for each respective application indicating a relevance of the respective application to the user. For example, system process 205 may utilize contextual data (e.g., time of the day, user's location, recent application usage, history, calendar events, etc.,) to determine which of the items are most relevant to the user. For example, if a user typically opens a document editing application and resumes work on a particular file each morning, the system process 205 may proactively surface or recommend both the document editing application and the specific document. As for another example, if the user has an ongoing conversation in a messaging application or an e-mail draft which is pending completion, the system process 205 can recommend these items.

In some embodiments, the system process 205 may generate a feature vector to represent these items and the contextual information associated with the user of the electronic device 110. Each feature vector maybe a structured representation that captures key contextual and behavioral features associated with the user with respect to the items. These features may include contextual attributes such as time of the day, location, device state, calendar events, user activity metrics such as frequency and recency of interaction with each application 207, engagement duration, application type, content category, file format, etc. In some embodiments, the system process 205 can process the feature vectors using the ML model 208A to generate a likelihood indicating the relevance likelihood of each of the items to the user.

At block 808, the system process 205 determines one or more applications having the highest likelihood relative to other applications. For example, based on the generated relevance likelihoods, the system process 205 may generate recommendations that includes items deemed most relevant under the current user context. In some embodiments, system process 205 may apply a predefined or dynamically adjusted threshold to filter out items with relevance likelihoods that do not meet the threshold to ensure that only items with sufficiently high relevance are selected for recommendation. Once filtered, the system process 205 can rank the remaining items - for example, in descending order of their likelihoods.

At block 810, the system process 810 displays via the UI, one or more UI elements corresponding to the one or more applications. For example, the system process 205 may display the recommended items in the UI 302 according to their respective rankings, which are determined based on the relevance likelihoods generated by the ML model 208A. The items with the highest likelihoods are presented in a more prominent position such as at the top of the vertically ordered list, with a prioritized grid layout and/or in a portion of the UI 302 pre-configured for presenting recommendations (e.g., UI element 312). For example, if a user frequently opens a spreadsheet application to update a financial report every Monday morning, and the ML model 208A assigns the spreadsheet application and the financial report a high relevance likelihood, both items may appear at the topmost position within portion of the UI 302 pre-configured for presenting recommendations (e.g., UI element 312) upon login. Similarly, the system process 205 might display a messaging application with the ongoing conversation, followed by a recently captured camera image that the user often shares, and then a draft e-mail left unsent the previous day. The system process 205 may display these items within portion of the UI 302 pre-configured for presenting recommendations (e.g., UI element 312) according to the descending order of likelihood, allowing the user to quickly engage with the most contextually relevant resources.

In some embodiments, the system process 205 may additionally recommend one or more menu items provided by the one or more applications 207 as a recommendation to user. For example, if the user is using a document editing application to edit a document, the system process 205 can use the ML model 208A to generate a likelihood for each of the menu items provided by the document editing application. For example, the system process 205 can generate a likelihood for a menu item that adjusts the font size of the letters and characters of a document, or a font style, or alignment. Depending on the user's past user activity, the ML model 208A can generate a relevance likelihood for each of the menu items and display them as recommendations to the user using the system-wide search application when the user is using the document editing application. For example, while the user is editing a document, the user may initiate a system search and provide a portion of a query. Based on the portion of the query and the user's current context of editing a document, the system process 205 can generate these recommendations and display them to the user. If the user interacts with any of the recommendations to select a menu items (e.g., text alignment to left,) the system process 205 can pass the indication of the user's selection to the document editing application. In response, the document editing application can perform the action associated with the selected menu item.

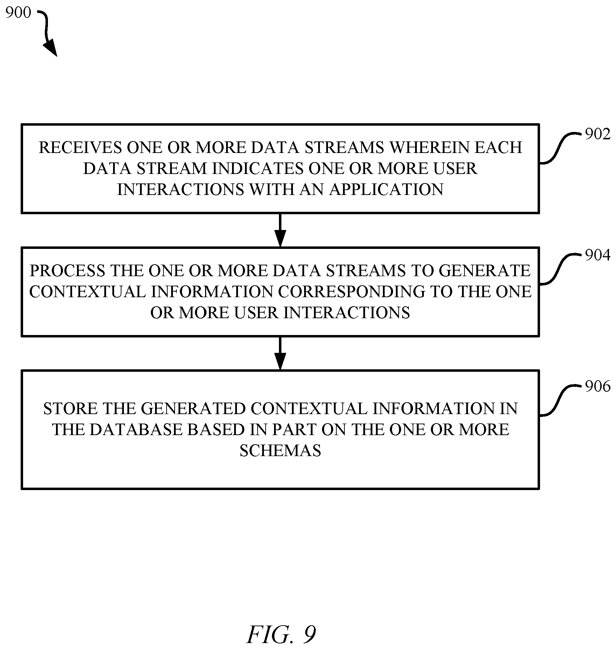

FIG. 9 is a flowchart illustrating an example process 900 for generating contextual information corresponding to the one or more user interactions. For explanatory purposes, the process 900 is primarily described herein with reference to the electronic device 110 and server 120 of FIG. 1. However, the process 900 is not limited to the electronic device 110 and the server 120 of FIG. 1, and one or more blocks (or operations) of the process 900 may be performed by one or more other suitable devices. Further for explanatory purposes, the blocks of the process 900 are described herein as occurring in serial, or linearly. However, multiple blocks of the process 900 may occur in parallel. In addition, the blocks of the process 900 need not be performed in the order shown and/or one or more blocks of the process 900 need not be performed and/or can be replaced by other operations.

At block 902, the system process 205 receives one or more data streams wherein each data stream indicates one or more user interactions with an application. For example, the system process 205 is configured to receive from one or more applications 207, one or more data streams indicating discrete, temporally ordered user interactions or behavioral signals. Data stream may correspond to distinct applications or subsystems, and each record in the stream indicates one or more attributes characterizing the specific instance of user engagement. For example, a record in a first stream may indicate that a user launched a messaging application at a particular timestamp, while another stream may indicate that the user initiated a media playback using a music application or modified a document with a document editing application.

At block 904, the system process 205 processes the one or more data streams to generate contextual information corresponding to the one or more user interactions. For example, the system process 205 is configured to associate data extracted from a data stream with a corresponding schema definition. These schema types may include but are not limited to, a user schema that defines the attributes and relationships relevant to the user (e.g., user behavioral patterns,) an application schema that defines user interactions with the one or more applications 207 executing on the electronic device 110 and other devices connected to a user account and an event schema that defines user actions or events experienced by the user. In some embodiments, the schema definitions are stored in a catalog that resides on the electronic device 110 and defines the semantic structure of database table (also referred to as a view). Each schema specifies one or more attribute fields such as timestamp, user activity type, application identifier, application usage duration and additionally include rules for normalization, transformation, and attribute derivation. For example, a schema associated with an application launch stream may define attributes such as application identifier, launch timestamp, etc. The system process 205 can use the schema to extract structured information from the data streams to generate a corresponding structured record. Likewise, a media interaction stream may include a schema that defines attributes such as media identifier, media type, action type (e.g., play, pause), and usage duration. In some embodiments, different types of schemas can include a schema associated with the user, a schema associated with the one or more applications and a schema associated with the events experienced by the user.

In some embodiments, the system process 205 can store a data record (e.g., a record indicating an event, a relationship etc.) in one or more database tables or views. In some embodiments, these views correspond to contextual abstractions such as recently used application, frequently contacted individuals, etc. In some embodiments, the views stored in the database 611 are queryable tables generated by the view engine 608 by processing the one or more data streams 618 (e.g., application usage data streams, user activity streams, etc.,) and contextual data from one or more applications 620 (e.g., calendar or messaging applications, etc.,) and one or more servers 616 (e.g., cloud-based servers). In other words, the views represent a derivation or an aggregation that captures aspects of user behavior and preferences. For example, a view associated with recently used applications may aggregate application launch events from the application launch data stream, along with metadata such as duration of use, frequency of application invocation, etc. These views are incrementally maintained by the system process 205 or by a view engine 608 which ensures that the views are updated according to the input data streams in near real time or during scheduled update intervals.

In some embodiments, the system process 205 may use the view engine 608 to generate multiple categories of views, including but not limited to a knowledge graph (KG) view, an application view, and a user view. Each of these views correspond to a distinct type of data and is generated from one or more underlying data sources, and is optimized for query based access by one or more applications 207 and/or the system process 205. In some embodiments, the KG views 610 may represent structured tables derived from a knowledge graph that includes entities and relationships that are inferred or extracted from user data (e.g., contacts, messages, calendar, etc.) The KG view 610 may also indicate relationships between one or more entities (e.g., family, or organizational hierarchies,) or labeled entities (e.g., mother, manager, frequent collaborator, etc.) In some embodiments, the KG views are incrementally maintained and updated as new information becomes available from data streams. For example, if the user labels someone as friend in the contacts application, this update may be propagated into the knowledge graph and automatically reflected in the KG view 610 associated with the user's friend.

In some embodiments, the system process 205 can generate application views 612 which are structured queryable representations of behavioral, or interaction data captured overtime from the one or more data streams. These sources may include streams of user activities such as application launches, media playback, notification interactions, screen time measurements and other temporal signals indicating how the user interacts with the electronic device 110 or the one or more applications 207. In some embodiments, the application views 612 may provide aggregated information associated with events (e.g., app launches, app termination, messaging, etc.,) such as most recently used applications, frequently visited places or recent activity sessions. In some embodiments, the application views 612 may be incrementally updated by the view engine 608 as new event information are received from the data streams.

In some embodiments, processing the one or more data streams to determine events experienced by the user, and/or events that occurred in associated with the electronic device 110 (and/or other devices associated with the user), includes analyzing the streams of data provided by the applications 207 and the sensors on the electronic device 110. Each data stream may represent a sequence of timestamped observations, such as application launches, device state transitions, user inputs, motion detections or communication activities. The system process 205 can use the view engine 608 to process these data streams to apply one or more transformations, filtering, enrichment operations to extract semantically meaningful activity patterns.

In some embodiments, the system process 205 can determine events experienced by the user by identifying and extracting a set of event attributes from the data streams or application data, where the attributes may include but are not limited to an event type (e.g., application launch, device interaction, calendar meeting,) a location attribute (e.g., a GPS coordinates, a label associated with a location,) a timestamp (e.g., a date and time of occurrence) and one or more other indicators (e.g., network connection, battery level, current activity state.)

In some embodiments, the system process 205 may determine the events experienced by the user by aggregating and correlating local data streams with remote data sources. For example, the system process 205 may query one or more external servers (e.g., cloud-based servers) to retrieve supplemental metadata related to the time or location of the local event. Such metadata may include calendar entries, traffic status, weather conditions, public holidays, or external notifications.

In some embodiments, the system process 205 can generate user views 614 which are structured queryable representations associated with individuals, activities, preferences, or behavioral patterns specific to the user of the electronic device 110. The user view 614 are generated and maintained by the view engine 608 by processing the one or more data streams updated incrementally in response to changes in underlying data. For example, a user view may include a table such as a user relationship view that encodes interpersonal relationships between the user of the electronic device 110 and other entities.

At block 906, the system process 205 stores the generated contextual information in the database based in part on the one or more schemas. For example, the views stored in the database 611 are queryable tables generated by the view engine 608 by processing the one or more data streams 618 (e.g., application usage data streams, user activity streams, etc.,) and contextual data from one or more applications 620 (e.g., calendar or messaging applications, etc.,) and one or more servers 616 (e.g., cloud-based servers).

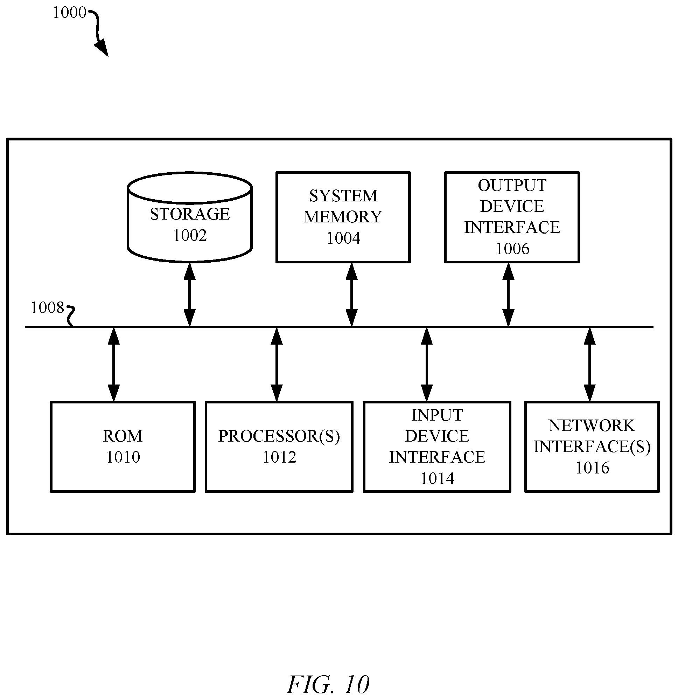

FIG. 10 illustrates an electronic system 1000 with which one or more implementations of the subject technology may be implemented. The electronic system 1000 can be, and/or can be a part of, server 120 and/or electronic device 110 shown in FIG. 1. The electronic system 1000 may include various types of computer readable media and interfaces for various other types of computer readable media. The electronic system 1100 includes a bus 1008, one or more processing unit(s) 1012, a system memory 1004 (and/or buffer), a ROM 1010, a permanent storage device 1102, an input device interface 1014, an output device interface 1006, and one or more network interfaces 1016, or subsets and variations thereof.

The bus 1008 collectively represents all system, peripheral, and chipset buses that communicatively connect the numerous internal devices of the electronic system 1000. In one or more implementations, the bus 1108 communicatively connects the one or more processing unit(s) 1012 with the ROM 1010, the system memory 1104, and the permanent storage device 1002. From these various memory units, the one or more processing unit(s) 1012 retrieves instructions to execute and data to process in order to execute the processes of the subject disclosure. The one or more processing unit(s) 1012 can be a single processor or a multi-core processor in different implementations.

The ROM 1010 stores static data and instructions that are needed by the one or more processing unit(s) 1012 and other modules of the electronic system 1000. The permanent storage device 1002, on the other hand, may be a read-and-write memory device. The permanent storage device 1002 may be a non-volatile memory unit that stores instructions and data even when the electronic system 1000 is off. In one or more implementations, a mass-storage device (such as a magnetic or optical disk and its corresponding disk drive) may be used as the permanent storage device 1002.

In one or more implementations, a removable storage device (such as a floppy disk, flash drive, and its corresponding disk drive) may be used as the permanent storage device 1002. Like the permanent storage device 1002, the system memory 1004 may be a read-and-write memory device. However, unlike the permanent storage device 1002, the system memory 1004 may be a volatile read-and-write memory, such as random-access memory. The system memory 1004 may store any of the instructions and data that one or more processing unit(s) 1012 may need at runtime. In one or more implementations, the processes of the subject disclosure are stored in the system memory 1004, the permanent storage device 1002, and/or the ROM 1010. From these various memory units, the one or more processing unit(s) 1012 retrieves instructions to execute and data to process in order to execute the processes of one or more implementations.

The bus 1008 also connects to the input and output device interfaces 1014 and 1006. The input device interface 1014 enables a user to communicate information and select commands to the electronic system 1000. Input devices that may be used with the input device interface 1014 may include, for example, alphanumeric keyboards and pointing devices (also called "cursor control devices"). The output device interface 1006 may enable, for example, the display of images generated by electronic system 1000. Output devices that may be used with the output device interface 1006 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 10, the bus 1008 also couples the electronic system 1000 to one or more networks and/or to one or more network nodes, such as the electronic device 110 or the server 120 shown in FIG. 1, through the one or more network interface(s) 1016. In this manner, the electronic system 1100 can be a part of a network of computers (such as a LAN, a wide area network ("WAN"), or an Intranet, or a network of networks, such as the Internet. Any or all components of the electronic system 1000 can be used in conjunction with the subject disclosure.

Implementations within the scope of the present disclosure can be partially or entirely realized as computer program products comprising code in a tangible computer-readable storage medium (or multiple tangible computer-readable storage media of one or more types) encoding one or more instructions of the code. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or segmented in a different way) all without departing from the scope of the subject technology.

Aspects of the present technology may include the gathering and use of data available from specific and legitimate sources to train machine learning models and to apply to trained machine learning models deployed in systems. The present disclosure contemplates that in some instances, this gathered data may include personal information data that uniquely identifies or can be used to identify a specific person. Such personal information data can include meta-data or other data associated with images that may include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to train a machine learning model for better performance. Accordingly, use of such personal information data enables users to have greater control of the delivered content. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of training data collection, the present technology can be configured to allow users to select to "opt in" or "opt out" of participation in the collection of personal information data during registration for services or anytime thereafter. In another example, users can select not to provide mood-associated data for use as training data. In yet another example, users can select to limit the length of time mood-associated data is maintained or entirely block the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, training data can be selected based on aggregated non-personal information data or a bare minimum amount of personal information, such as the content being handled only on the user's device or other non-personal information available to as training data.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation, or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any embodiment described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Exemplary methods, computer-implemented method, devices, and non-transitory computer-readable storage media are set out in the following items.
1. A computer-implemented method, comprising:
   receiving, by a system process of a user device and via a search field, a first user input comprising at least a portion of a query;
   determining that the at least the portion of the query corresponds to one or more application resources of an application previously interacted with by a user of the user device;
   generating, using a machine learning (ML) model for each respective application resource and based at least in a part on a current user context, a respective likelihood indicating a respective relevance of each respective application resource to the at least the portion of the query;
   displaying one or more user interface (UI) elements, each UI element indicating a respective application resource from the one or more application resources, wherein the one or more UI elements are arranged according to each respective likelihood determined for each of the respective one or more application resources; and
   in response to receiving a second user input indicating a selection of a UI element of the one or more UI elements:
      foregrounding or launching the application; and
      providing, by the system process and to the application, an indication of the application resource associated with the selected UI element.
2. The computer-implemented method of item 1, wherein determining the one or more application resources of the application comprises:
   querying the application using the at least the portion of the query; and
   in response to querying the application, receiving a response from the application indicating the one or more application resources associated with the first user input and based in part on a prior user activity of the application.
3. The computer-implemented method of item 1, wherein displaying the one or more UI elements comprise displaying a respective label associated with each respective application resource of the one or more application resources.
4. The computer-implemented method of item 3, wherein each respective application resource of the one or more application resources comprises a webpage.
5. The computer-implemented method of item 4, wherein the label associated each application resource of the one or more application resources comprises a domain name of the webpage.
6. The computer-implemented method of item 1, further comprises:
   receiving a third user input, wherein the third user input is based in part on at least a user configurable label indicating the application and the at least the portion of the query;
   determining that the user configurable label is associated with the application; and
   in response to determining that the user configurable label is associated with the application, foregrounding of launching the application;
   providing an indication of the application resource associated with the at least the portion of the query.
7. The computer-implemented method of item 1, wherein the current user context is associated with contextual information retrieved from one or more user accounts of the user.
8. The computer-implemented method of item 1, wherein the current user context is associated with application data retrieved from a plurality of applications on the user device.
9. The computer-implemented method of item 1, wherein the system process is a system search application.
10. The computer-implemented method of item 1, wherein the application is a web browser application.
11. A non-transitory machine-readable medium comprising instructions that, when executed by one or more processors, cause the one or more processors to perform operations comprising:
   displaying, by a system process of an electronic device, a user interface (UI) comprising a search field;
   prior to receiving an input in the search field of the UI:
      determining, by the system process and based in part on a current user context, a plurality of applications potentially relevant to a user of the electronic device;
      generating, by the system process using a machine learning (ML) model and based at least in part on the current user context, a respective likelihood for each respective application of the plurality of applications indicating a respective relevance of the respective application to the user;
      determining, by the system process, one or more applications of the plurality of applications having a highest likelihood relative to other applications of the plurality of applications; and
      in response to determining the one or more applications, displaying, by the system process and via the UI, one or more UI elements corresponding to the one or more applications.
12. The non-transitory machine-readable medium of item 11, wherein generating the respective likelihood for each respective application comprises:
   generating a feature vector associated with the respective application based in part on contextual information associated with the user and application data associated with the respective application; and
   processing the feature vector using the ML model to determine the respective likelihood associated with the respective application.
13. The non-transitory machine-readable medium of item 11, wherein the current user context is associated with contextual information retrieved from one or more user accounts of the user.
14. The non-transitory machine-readable medium of item 13, wherein the contextual information associated with the user comprises contextual information associated with one or more files currently open on the user device or another device associated with the user.
15. The non-transitory machine-readable medium of item 14, wherein the plurality of application comprises applications stored in the user device or the another device associated with the user.
16. A device comprising:
   a memory; and
   at least one processor configured to:
      display a user interface (UI) comprising a search field;
      prior to receiving an input in the search field of the UI:
         determine based in part on a current user context, a plurality of applications potentially relevant to a user of the device;
         generate using a machine learning (ML) model and based at least in part on the current user context, a respective likelihood for each respective application of the plurality of applications indicating a respective relevance of the respective application to the user;
         determine one or more applications of the plurality of applications having a highest likelihood relative to other applications of the plurality of applications; and
         in response to determining the one or more applications, display via the UI, one or more UI elements corresponding to the one or more applications.
17. The device of item 16, wherein the at least one processor configured to generate the respective likelihood for each respective application is further configured to:
   generate a feature vector associated with the respective application based in part on contextual information associated with the user and application data associated with the respective application; and
   process the feature vector using the ML model to determine the respective likelihood associated with the respective application.
18. The device of item 16, wherein the current user context is associated with contextual information retrieved from one or more user accounts of the user.
19. The device of item 18, wherein the contextual information associated with the user comprises contextual information associated with one or more files currently open on the user device or another device associated with the user.
20. The device of item 19, wherein the plurality of application comprises applications stored in the user device or the another device associated with the user.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method, comprising:
receiving, by a system process of a user device and via a search field, a first user input comprising at least a portion of a query;
determining that the at least the portion of the query corresponds to one or more application resources of an application previously interacted with by a user of the user device;
generating, using a machine learning (ML) model for each respective application resource and based at least in a part on a current user context, a respective likelihood indicating a respective relevance of each respective application resource to the at least the portion of the query;
displaying one or more user interface (UI) elements, each UI element indicating a respective application resource from the one or more application resources, wherein the one or more UI elements are arranged according to each respective likelihood determined for each of the respective one or more application resources; and
in response to receiving a second user input indicating a selection of a UI element of the one or more UI elements:
foregrounding or launching the application; and
providing, by the system process and to the application, an indication of the application resource associated with the selected UI element.

2. The computer-implemented method of claim 1, wherein determining the one or more application resources of the application comprises:
querying the application using the at least the portion of the query; and
in response to querying the application, receiving a response from the application indicating the one or more application resources associated with the first user input and based in part on a prior user activity of the application.

3. The computer-implemented method of any of claims 1-2, wherein displaying the one or more UI elements comprise displaying a respective label associated with each respective application resource of the one or more application resources.

4. The computer-implemented method of claim 3, wherein each respective application resource of the one or more application resources comprises a webpage.

5. The computer-implemented method of claim 4, wherein the label associated each application resource of the one or more application resources comprises a domain name of the webpage.

6. The computer-implemented method of any of claims 1-5, further comprises:
receiving a third user input, wherein the third user input is based in part on at least a user configurable label indicating the application and the at least the portion of the query;
determining that the user configurable label is associated with the application; and
in response to determining that the user configurable label is associated with the application, foregrounding of launching the application;
providing an indication of the application resource associated with the at least the portion of the query.

7. The computer-implemented method of any of claims 1-6, wherein the current user context is associated with contextual information retrieved from one or more user accounts of the user.

8. The computer-implemented method of any of claims 1-7, wherein the current user context is associated with application data retrieved from a plurality of applications on the user device.

9. The computer-implemented method of any of claims 1-8, wherein the system process is a system search application.

10. The computer-implemented method of any of claims 1-9, wherein the application is a web browser application.

11. A non-transitory machine-readable medium comprising instructions that, when executed by one or more processors, cause the one or more processors to perform operations comprising:
displaying, by a system process of an electronic device, a user interface (UI) comprising a search field;
prior to receiving an input in the search field of the UI:
determining, by the system process and based in part on a current user context, a plurality of applications potentially relevant to a user of the electronic device;
generating, by the system process using a machine learning (ML) model and based at least in part on the current user context, a respective likelihood for each respective application of the plurality of applications indicating a respective relevance of the respective application to the user;
determining, by the system process, one or more applications of the plurality of applications having a highest likelihood relative to other applications of the plurality of applications; and
in response to determining the one or more applications, displaying, by the system process and via the UI, one or more UI elements corresponding to the one or more applications.

12. The non-transitory machine-readable medium of claim 11, wherein generating the respective likelihood for each respective application comprises:
generating a feature vector associated with the respective application based in part on contextual information associated with the user and application data associated with the respective application; and
processing the feature vector using the ML model to determine the respective likelihood associated with the respective application.

13. The non-transitory machine-readable medium of any of claims 11-12, wherein the current user context is associated with contextual information retrieved from one or more user accounts of the user.

14. The non-transitory machine-readable medium of claim 13, wherein the contextual information associated with the user comprises contextual information associated with one or more files currently open on the user device or another device associated with the user, wherein the plurality of application comprises applications stored in the user device or the another device associated with the user.

15. A device comprising:
a memory; and
at least one processor configured to perform the method of any of claims 1-10.
